# EUROPÄISCHE PATENTSCHRIFT

(11) **EP 1 719 862 B1**
(45) Veröffentlichungstag und Bekanntmachung des Hinweises auf die Patenterteilung: **11.11.2009**
(21) Anmeldenummer: 06116708.6
(22) Anmeldetag: 06.03.2004
(51) Int. Cl.: E05B 19/04, A44C 5/00, A45F 5/00, G09F 3/06

(54) **Schlüssel mit einer Kennzeichnung**
Key with an identifier
Clé avec un identificateur

(30) Priorität: 18.03.2003 DE 10311884
(43) Veröffentlichungstag der Anmeldung: 08.11.2006
(62) Teilanmeldung aus: 04005371.2
(73) Patentinhaber: Schulte-Schlagbaum Aktiengesellschaft, 42553 Velbert (DE)
(72) Erfinder: Geiger, Diethard, 42551, Velbert (DE); Scheffler, Matthias, 42489, Wülfrath (DE)
(74) Vertreter: Grundmann, Dirk

(56) Entgegenhaltungen:
- DE-A1- 4 335 474
- DE-B- 1 196 537
- US-A- 4 349 975
- US-A- 6 089 060

## Beschreibung

Die Erfindung betrifft einen Schlüssel gemäß Gattungsbegriff des Anspruchs 1.

Ein derartiger Schlüssel ist aus der US 4,349,957 vorbekannt. Dort wird ein Schlüssel beschrieben, dessen Schlüsselreide in einer Aussparung eines Griffstücks steckt. Der Schlüssel wird dabei in dieser Aussparung hineingesteckt. Der Schlüsselbart wird durch einen Schlitz des Randes der Aussparung hindurchgefädelt, so dass die Schlüsselreide in der Aussparung liegt. Auf der Schlüsselreide liegt eine Kennzeichnungsplatte. Die wird von einem Sichtfenster überfangen. Die Zuordnung der Kennzeichnungsplatte erfolgt von der Schlüsselbreitseite her.

Aus der US 6,089,060 ist ebenfalls ein Schlüssel vorbekannt, bei dem die Schlüsselreide in ein einer Aussparung eines Griffstücks liegt. Auch hier erfolgt die Zuordnung des Schlüssels von der Breitseite des Griffstücks her.

Die DE 1 196 537 beschreibt einen Schlüssel mit einem Befestigungsabschnitt. Dieser Befestigungsabschnitt ist in ein Griffstück eingesteckt. Das Griffstück besitzt einen weiteren Schacht, in dem eine Kennzeichnungsplatte eingesetzt ist.

Der Erfindung liegt die Aufgabe zugrunde, den eingangs genannten Schlüssel gebrauchsvorteilhaft weiterzubilden.

Gelöst wird die Aufgabe durch die in den Ansprüchen angegebene Erfindung.

Der Befestigungsabschnitt ist in einen Einsteckschacht des Griffstücks eingesteckt. Die Einfügeöffnung des Griffstücks ist ein sich parallel zum Einsteckschacht sich erstreckender Schacht, dem eine schmale Einstecköffnung gegenüberliegt, in welche eine Zunge der Kennzeichnungsplatte eingreift. Derartige Schlüssel dienen in der Regel dazu, ein Fach, Schrank etc. schließen bzw. öffnen zu können. Daher muss dem Benutzer angezeigt werden, welches Fach, Schrank etc. zu seinem Schlüssel gehört. Zu diesem Zweck ist erfindungsgemäß ein aus Schlüsselschaft und Griffstück bestehender Schlüssel vorgesehen wobei ein Befestigungsabschnitt des Schlüsselblattes im Griffstück steckt und das Griffstück mit einer Kennzeichnung versehen ist. Um bspw. die Schlüssel einer Schließanlage mit den entsprechenden Kennzeichnungen günstig ausstatten zu können, ist die Kennzeichnung einer in eine Einfügeöffnung des Griffstückes einsetzbaren Kennzeichnungsplatte zugeordnet, welche Kennzeichnungsplatte ein Sichtfenster zur Breitfläche des Befestigungsabschnittes verschließt. Die Kennzeichnungsplatte dient einerseits dazu, den Schlüssel identifizieren und zuordnen zu können; anderseits deckt die Kennzeichnungsplatte das Sichtfenster zur Breitfläche des Befestigungsabschnittes ab. Bei nicht in die Einfügeöffnung eingesetzter Kennzeichnungsplatte kann dann bspw. die an dem Befestigungsabschnitt vorgesehene Schlüsselnummer festgestellt werden. Im Detail handelt es sich bezüglich der Einfügeöffnung um einen sich parallel zum Befestigungsschacht erstreckenden Schacht. Dies erlaubt es, das Griffstück hinsichtlich seiner Dimensionierung optimal zu nutzen. Weiterhin ist vorgesehen, dass die die Kennzeichnung tragende Breitseite der Kennzeichnungsplatte durch ein im Wesentlichen mit dem Sichtfenster fluchtendes Kennzeichnungsfenster sichtbar ist. Um auch bezüglich der Kennzeichnungsplatte einen Mißbrauch auszuschließen, sind von der Kennzeichnungsplatten-Schmalseite und der zugeordneten Wand des die Einfügeöffnung bildenden Schachtes ausgebildete Rast- und Gegenrastmittel vorgesehen zur Fesselung der Kennzeichnungsplatte in der Einfügeöffnung. Montagetechnisch günstig ist es, dass die Einsteckrichtung der Kennzeichnungsplatte quergerichtet zur Einsteckrichtung des Schlüsselblattes verläuft. Also wirkt der Schließabschnitt des Schlüsselblattes nicht störend bei der Montage. Vielmehr kann der Schließabschnitt noch dazu vorgesehen sein, den Schlüssel mit einer Hand bei der Montage halten zu können.

Hinsichtlich der Ausstattung einer größeren Anzahl von Schlüsseln mit Kennzeichnungsplatten ist ein von einem Rahmen gehaltener Satz von durchnummerierten Kennzeichnungsplatten vorgesehen, wobei die nebeneinander angeordneten Kennzeichnungsplatten mit Abrissstegen mit Rahmenschenkeln verbunden sind. Es können daher die jeweiligen benötigten Kennzeichnungsplatten nach Durchtrennen der Abrissstege dem Rahmen entnommen werden. Die verbleibenden Kennzeichnungsplatten sind unverlierbar dem Rahmen zugeordnet. Es muss stets ein willensbetontes Entnehmen der Kennzeichnungsplatten erfolgen. Um eine größere Anzahl von Kennzeichnungsplatten im Rahmen unterbringen zu können, bildet dieser mehrere Zwischenschenkel aus, an denen die zeilenartig angeordneten Kennzeichnungsplatten mit Abrissstegen verbunden sind.

Nachstehend wird ein Ausführungsbeispiel der Erfindung anhand der Zeichnungen erläutert. Es zeigt:
- Fig. 1: eine Draufsicht auf einen an einem Halteband befestigten Schlüssel,
- Fig. 2: die Ansicht gemäß Pfeilrichtung II in Fig.1,
- Fig. 3: in stark vergrößerter Darstellung einen Längsschnitt durch den Schlüssel mit zugehörigem Verbindungsstück,
- Fig. 4: eine Draufsicht zu Fig. 3,
- Fig. 5: den Schnitt nach der Linie V-V in Fig. 3,
- Fig. 6: den Schnitt nach der Linie VI-VI in Fig. 3,
- Fig. 7: den Schnitt nach der Linie VII-VII in Fig. 3,
- Fig. 8: eine abgewandelte Ausgestaltung des Verbindungsstückes, welches ein Befestigungsauge ausbildet,
- Fig. 9: eine klappfigürliche Ansicht der Fig. 8,

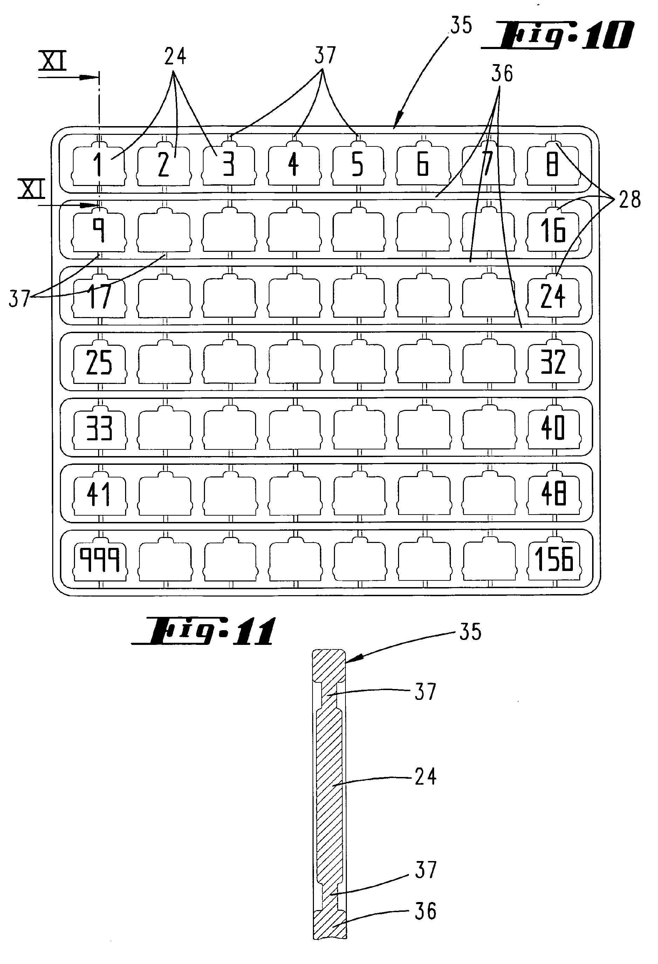

- Fig. 10: einen von einem Rahmen gehaltenen Satz durchnummerierter Kennzeichnungsplatten und
- Fig.11: in stark vergrößerter Darstellung den Schnitt nach der Linie XI-XI in Fig. 10.

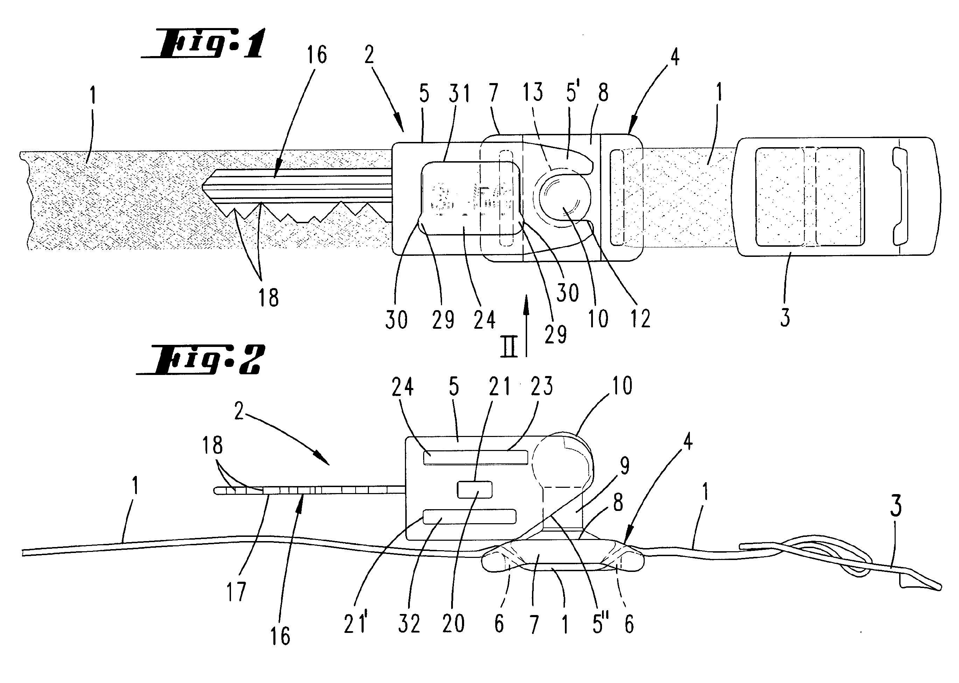

Gemäß Fig.1 und 2 ist mit der Ziffer 1 ein Halteband bezeichnet. Dieses ist in Form eines Armbandes gestaltet. Das Halteband 1 dient zur Festlegung eines Schlüssels 2. Ein solches dargestelltes Halteband 1 mit Schlüssel 2 wird dem Besucher einer Badeanstalt ausgehändigt. Mittels des Schlüssels 2 kann er dann das Schloss eines Schließfaches oder einer Umkleidekabine betätigen. Anschließend wird das Halteband mit Schlüssel unverlierbar am Arm getragen, was bspw. mittels einer am einen Ende des Haltebandes 1 befestigten Schließe 3 vornehmbar ist.

Zur Festlegung des Schlüssels 2 dient ein Verbindungsstück 4, an welchem ein Griffstück 5 des Schlüssels 2 unverlierbar angeordnet ist. Das Verbindungsstück 4 formt eine mit Durchzugsöffnungen 6 ausgebildete Schnalle 7. Die Durchzugsöffnungen 6 befinden sich in stumpfwinklig von der Schnalle 7 abgewinkelten Endabschnitten. Die Durchzugsöffnungen 6 werden von dem Halteband 1 gemäß Darstellung nach Fig.1 und 2 durchsetzt derart, dass die zwischen den Durchzugsöffnungen 6 verbleibende Länge des Haltebandes 1 unterhalb des Schnallensteges 8 verläuft. Hierdurch ist es möglich, das Verbindungsstück 4 relativ zum Halteband 1 zu verlagern und damit auch den Schlüssel 2.

Mittig geht von dem Schnallensteg 8 ein zapfenförmig gestalteter Verbindungssteg 9 aus, welcher endseitig einen Kugelkopf 10 ausbildet. Der Kugelkopf 10 ist in seinem Durchmesser größer als derjenige des Verbindungssteges 9, so dass der Kugelkopf 10 den Verbindungssteg 9 überragt. Verbindungssteg 9 mit Kugelkopf 10 sind materialeinheitlich gestaltet und bestehen aus Kunststoff. Das Fertigen des Verbindungsstückes 4 ist daher im Wege des Kunststoff-Spritzverfahrens möglich. Eine Ausbildung des Verbindungsstückes aus Metall wäre jedoch auch denkbar.

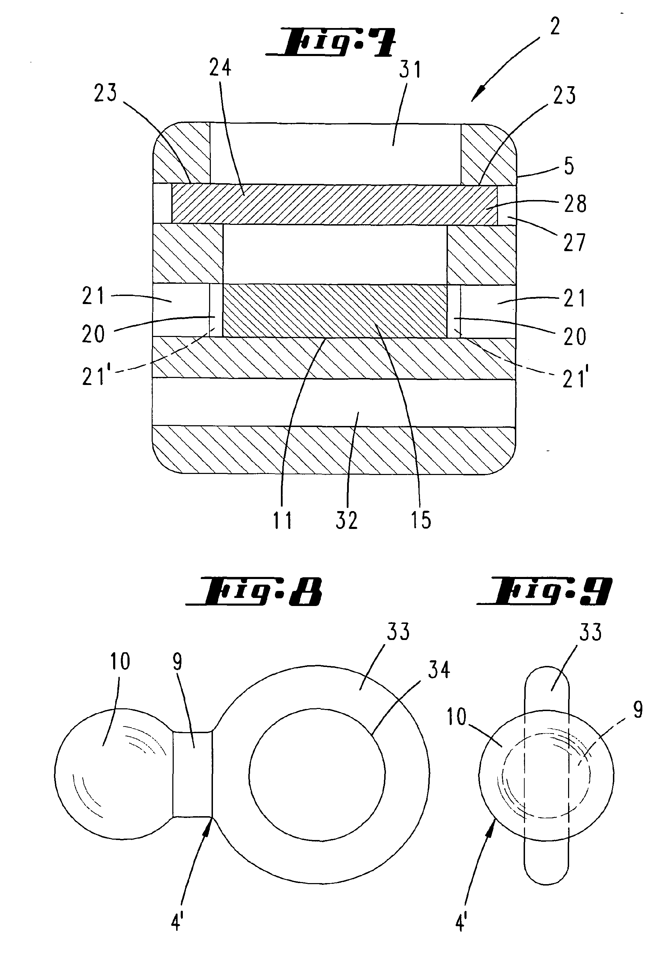

Das Griffstück 5 besitzt einen quadratischen Querschnitt, vgl. Fig. 7. Von der einen Stirnseite des Griffstückes 5 geht ein flacher Einsteckschacht 11 aus, wobei die Breitflächen des Schachtes 11 parallel zu den korrespondierenden Parallelflächen des Griffstückes 5 verlaufen. Der Einsteckschacht 11 erstreckt sich bis in einen gabelförmigen Endabschnitt 5' des Griffstückes 5 hinein. Innenseitig bilden die Gabelschenkel eine von der Gabelöffnung 12 gekreuzte Kugelpfanne 13. Deren Durchmesser ist etwas größer als der Durchmesser des Kugelkopfes 10, so dass sich dieser innerhalb der Kugelpfanne 13 leicht bewegen kann. Im Bereich der Kugelpfanne 13 hat die Gabelöffnung 12 eine Weite, welche etwas größer ist als der Durchmesser des Verbindungssteges 9. Das dem eingezogenen Ende der Gabelöffnung 12 gegenüberliegende Ende erweitert sich auf die Größe des Kugelkopf-Durchmessers. Demzufolge kann von diesem Ende her der Kugelkopf 10 behinderungsfrei in die Kugelpfanne 13 eingelegt werden. Zur Sicherung des einliegenden Zustandes des Kugelkopfes 10 dient ein Verriegelungselement 14. Dieses ragt in den von der Gabelöffnung 12 gebildeten Einsteckfreiraum F und führt zu einer formschlüssigen Einlagerung des Kugelkopfes 10 in der Kugelpfanne 13. Das bedeutet, dass der Kugelkopf 10 nicht die Kugelpfanne 13 verlassen kann. Jedoch kann das Griffstück 5 relativ zum Verbindungssteg 9 verdreht und verschwenkt werden.

Das vorgenannte Verriegelungselement 14 ist als Schieber gestaltet und von einem in den Einsteckschacht 11 des Griffstückes 5 eingeschobenen Befestigungsabschnitt 15 des Schlüsselblattes 16 ausgebildet. An den Befestigungsabschnitt 15 schließt sich der das einsteckseitige Stirnende überragende Schließabschnitt 17 des Schlüsselblattes 16 an. In diesem Schließabschnitt 17 befinden sich Schließkerben 18 zum Einordnen von Zuhaltungen eines Schlosses.

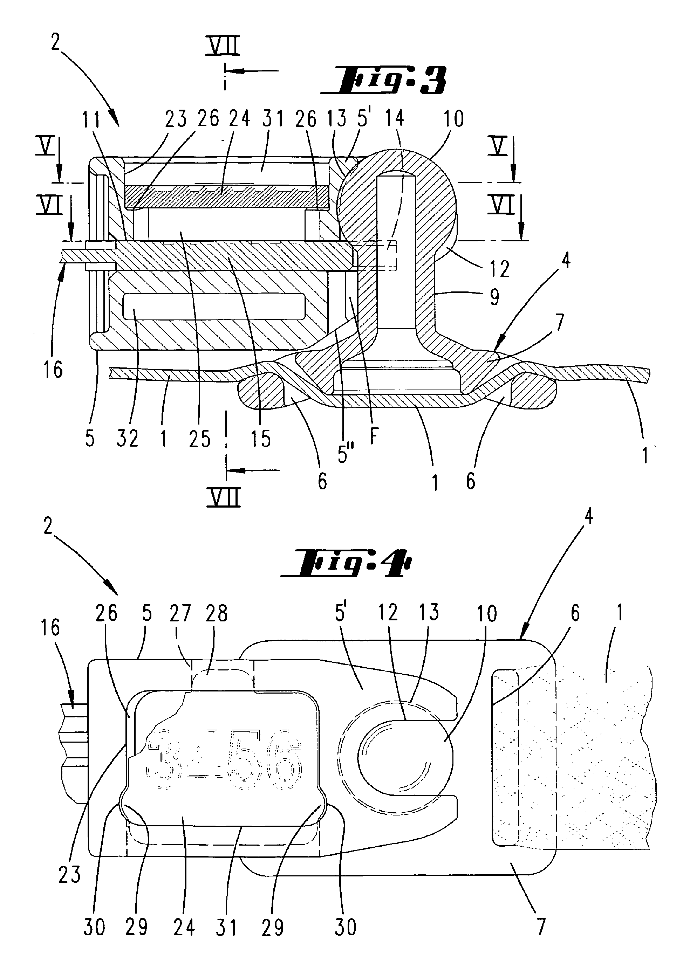

In eingeschobenem Zustand des Befestigungsabschnittes 15 untergreift eine als Kehle gestaltete U-Öffnung 19 den Kugelkopf 10. Ferner umfasst die U-Öffnung 19 teilweise den Verbindungssteg 9. Dadurch kann der Verbindungssteg 9 mit dem Kugelkopf 10 auch in die Stellung gemäß Fig. 2 und 3 geschwenkt werden, in welcher eine dichte Anlage des Schlüsselblattes 16 und des Griffstückes 5 zum Halteband 1 ermöglicht ist. Ein gewisses Bewegungsspiel zwischen der U-Öffnung 19 und dem Verbindungssteg 9 gestattet eine geringfügige Kippverlagerung in Seitenrichtung. In der in Fig. 3 veranschaulichten Schnittebene kann jedoch das Griffstück 5 mit dem Schlüsselblatt 16 bis in die gegenüberliegende Endstellung geschwenkt werden. In den Zwischenstellungen erlaubt das Kugelgelenk 10, 13 ein Verdrehen des Griffstückes 5 um seine Längsachse, so dass weitgehend der Schlüssel alle Positionen zum Verbindungsstück 4 einnehmen kann. Zur Optimierung der Beweglichkeit ist der der Kugelpfanne 13 gegenüberliegende Bereich der Gabelschenkel mit einer Abschrägung 5" versehen.

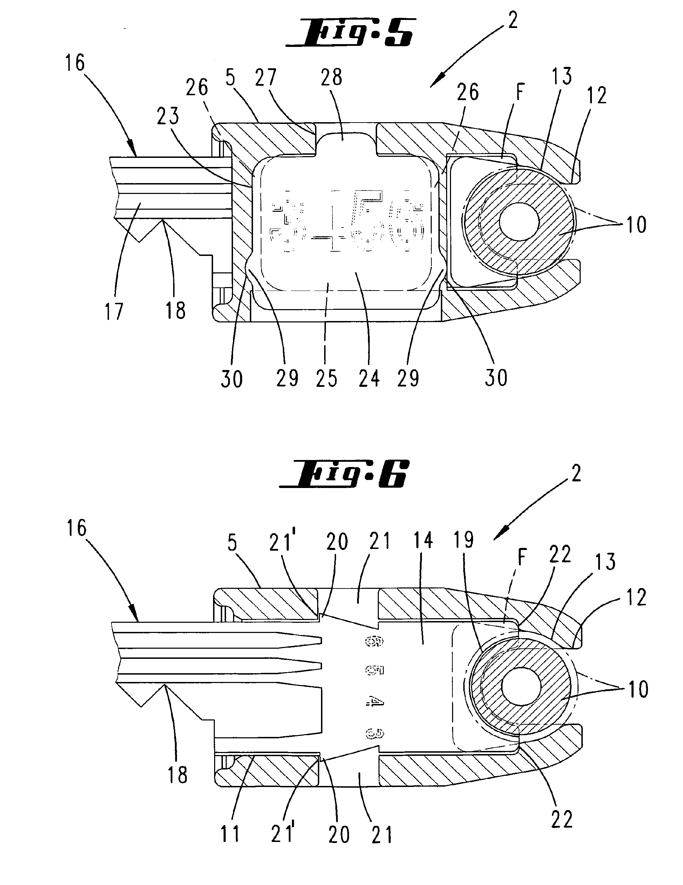

Um ein unbefugtes Herausziehen des Befestigungsabschnittes 15 aus dem Einsteckschacht 11 zu verhindern, sind an den Befestigungsabschnitt-Schmalseiten hakenförmige Rastmittel angeformt. Diese wirken zusammen mit Gegenrastmitteln 21 der zugeordneten Wand des Einsteckschachtes 11. Beim Ausführungsbeispiel handelt es sich bei den Gegenrastmitteln 21 um fensterförmige Öffnungen, in welche die hakenförmigen Rastmittel 20 eingreifen und sich nach Einschieben des Befestigungsabschnittes 15 abzugsverhindernd vor die Öffnungskanten 21' der Gegenrastmittel 21 legen, vgl. Fig. 6. Um eine Verlagerung des Befestigungsabschnittes 15 in Einsteckrichtung zu begrenzen, bildet der Einsteckschacht 11 im Bereich der Gabelöffnung 12 quer zur Einsteckrichtung verlaufende Anschläge 22, die mit dem zugekehrten Stirnende des Befestigungsabschnittes 15 zusammenwirken.

Parallel beabstandet zum Einsteckschacht 11 bildet das Griffstück 5 eine fensterförmige Einfügeöffnung 23 aus. Diese dient zum formschlüssigen Einschub einer Kennzeichnungsplatte 24. Letztere verschließt ein Sichtfenster 25 zur Breitfläche des Befestigungsabschnittes 15. Das Sichtfenster 25 ist so dimensioniert, dass quer zur Einschubrichtung des Befestigungsabschnittes 15 Auflagestege 26 verbleiben, die beim Einschieben der Kennzeichnungsplatte 24 diese an den Seitenrändern stützen. Die Einschubrichtung der Kennzeichnungsplatte 24 verläuft quergerichtet zur Einsteckrichtung des Schlüsselblattes 16. Die Einfügeöffnung 23 ist jedoch nur zur einen Griffstückfläche hin offen. Zur anderen Seite hin ist nur eine schmalere Einschuböffnung 27 vorgesehen. In diese greift bei eingesteckter Kennzeichnungsplatte 24 eine am einschubseitigen Stirnende befindliche Zunge 28 ein. Um die Kennzeichnungsplatte 24 in der Einschubstellung sicher zu fixieren, gehen von den in Einschubrichtung verlaufenden Schmalflanken Rastmittel 29 in Form von gerundet verlaufenden Überständen aus, welche Rastmittel 29 in Gegenrastmittel 30 des Griffstücks 5 eingreifen. Diese sind kehlenförmig gestaltet und nehmen formschlüssig die Rastmittel 29 auf. Die Verrastung ist derart, dass unbefugte Manipulationen verhindert sind, um bspw. die Kennzeichnungsplatte 24 zu entnehmen.

Oberhalb der Einfügeöffnung 23 befindet sich am Griffstück 5 ein Kennzeichnungsfenster 31. Durch dieses kann der Benutzer das nummernartige Kennzeichen erkennen, um bspw. das zugehörige Schließfach zu benutzen, in dessen Schloss der Schlüssel passt.

Auch der Einsteckabschnitt 15 kann eine ziffernartige Kennzeichnung enthalten, die bspw. Aufschluss über die Schließung des Schlüssels 2 gibt. Dieses Kennzeichen ist jedoch erst nach Entnehmen der Kennzeichnungsplatte 24 erkennbar, und zwar durch das Kennzeichnungsfenster 31, die Einfügeöffnung 23 und das Sichtfenster 25.

Die Montage des Schlüssels 2 geschieht in der Weise, dass zunächst der Kugelkopf 10 des Verbindungssteges 9 in die Kugelpfanne 13 eingeführt wird, so dass dann die Stellung gemäß Fig. 3 vorliegt. Zur Formschlusssicherung wird sodann das Schlüsselblatt 16 mit seinem Einsteckabschnitt 15 voran in den Einsteckschacht 11 eingeschoben, bis die U-Öffnung 19 randmäßig den Kugelkopf 10 untergreift und teilweise den Verbindungssteg 9 umfasst. Dann kann der Verbindungssteg 9 mit seinem Kugelkopf 10 nicht mehr aus der Kugelpfanne 13 entnommen werden. Es ist lediglich möglich, Griffstück 5 und Verbindungsstück 4 relativ zueinander zu verschwenken und zu verdrehen.

In Gegenüberlage zum Sichtfenster 25 ist im Griffstück 5 ein Durchzugsfenster 32 vorhanden. Dieses kann vom Halteband 1 durchsetzt werden, wenn auf ein Kugelgelenk verzichtet wird.

Eine Abwandlung des Verbindungsstückes 4' geht aus Fig. 8 und 9 hervor. Dort ist der den Kugelkopf 10 ausbildende Verbindungssteg 9 einem ringförmigen Befestigungsauge 33 angeformt. Durch die Augenöffnung 34 kann ebenfalls ein Halteband durchgezogen werden, welches dann bevorzugt als Halsband zu tragen ist.

Um bspw. in einer Badeanstalt eine größere Anzahl von Schlüsseln mit unterschiedlichen Kennzeichnungsplatten 24 auszustatten, ist ein von einem Rahmen 35 gehaltener Satz von durchnummerierten Kennzeichnungsplatten 24 angeordnet. Der Rahmen 35 bildet mehrere Zwischenschenkel 36 aus. Letztere und die beiden äußeren, parallel dazu verlaufenden Rahmenschenkel dienen zur Halterung der reihenförmig hintereinander angeordneten Kennzeichnungsplatten 24. Jede Kennzeichnungsplatte 24 ist über Abrissstege 37 mit den Zwischenschenkeln 36 und Rahmenschenkeln verbunden. Die Abrissstege 37 haben dabei eine geringere Dicke als der Rahmen 35 bzw. die Kennzeichnungsplatten 24. Während die Dicke des Rahmens 35 geringfügig größer ist als die Dicke der Kennzeichnungsplatten 24, ist die Dicke der Kennzeichnungsplatten 24 größer als die Dicke der Abrissstege 37, so dass ein Verdrehen der Kennzeichnungsplatten 24 relativ zum Rahmen 35 zu einem Zertrennen der Abrissstege 37 führt.

Dieser Rahmen 35 mit den Zwischenschenkeln 36 und den Kennzeichnungsplatten 24 plus Abrissstegen 37 kann im Kunststoff-Spritzverfahren erzeugt werden.

## Patentansprüche

1. Aus Schlüsselblatt (16) und Griffstück (5) bestehender Schlüssel (2), wobei ein Befestigungsabschnitt (15) des Schlüsselblattes (16) im Griffstück (5) steckt und in einer Einfügeöffnung (23) des Griffstückes (5) eine Kennzeichnungsplatte (24) steckt, welche Kennzeichnungsplatte (24) ein Sichtfenster (25) zur Breitfläche des Befestigungsabschnittes (15) verschließt, **dadurch gekennzeichnet, dass** der Befestigungsabschnitt (15) in einen Einsteckschacht (11) des Griffstückes eingesteckt ist und die Einfügeöffnung (23) ein sich parallel zum Einsteckschacht (11) erstreckender Schacht ist, dem eine schmale Einstecköffnung (27) gegenüberliegt, in welche eine Zunge (28) der Kennzeichnungsplatte (24) eingreift.

2. Schlüssel nach Anspruch 1, **dadurch gekennzeichnet, dass** die die Kennzeichnung tragende Breitseite der Kennzeichnungsplatte (24) durch ein im Wesentlichen mit dem Sichtfenster (25) fluchtendes Kennzeichnungsfenster (31) sichtbar ist.

3. Schlüssel nach einem der vorhergehenden Ansprüche, **gekennzeichnet durch** von der Kennzeichnungsplatten-Schmalseite und der zugeordneten Wand des die Einfügeöffnung (23) bildenden Schachtes ausgebildete Rast- und Gegenrastmittel (29, 30) zur Fesselung der Kennzeichnungsplatte (24) in der Einfügeöffnung (23).

4. Schlüssel nach einem der vorhergehenden Ansprüche, **dadurch gekennzeichnet, dass** die Einsteckrichtung der Kennzeichnungsplatte (24) quergerichtet zur Einsteckrichtung des Schlüsselblattes (16) verläuft.

## Claims

1. A key (2) consisting of a key blade (16) and a gripping portion (5), a securing portion (15) of the key blade (16) being inserted in the gripping portion (5) and an identification plate (24) being inserted in an insertion opening (23) of the gripping portion (5), the identification plate (24) occluding a viewing window (25) onto the wide surface of the securing portion (15), **characterized in that** the securing portion (15) is inserted into an insertion passage (11) of the gripping portion and the insertion opening (23) is a passage that extends parallel to the insertion passage (11) and opposite which there is a narrow insertion opening (27), a tongue (28) of the identification plate (24) engaging in the narrow insertion opening (27).

2. A key according to Claim 1, **characterized in that** the identification-carrying wide side of the identification plate (24) is visible through an identification window (31) which is substantially aligned with the viewing window (25).

3. A key according to either of the preceding claims, **characterized by** snap-action latching and counter-latching means (29, 30) for securing the identification plate (24) in the insertion opening (23), the latching and counter-latching means being formed by the narrow side of the identification plate and the associated wall of the passage forming the insertion opening (23).

4. A key according to any of the preceding claims, **characterized in that** the direction of insertion of the identification plate (24) extends crosswise to the direction of insertion of the key blade (16).

## Revendications

1. Clé (2) composée d'une lame de clé (16) et d'une pièce de saisie (5), dans laquelle un tronçon de fixation (15) de la lame de clé (16) est inséré dans la pièce de saisie (5) et une plaque de caractérisation (24) est insérée dans une ouverture d'introduction (23) de la pièce de saisie (5), cette plaque de caractérisation (24) fermant une fenêtre de visualisation (25) par rapport à une surface large du tronçon de fixation (15), **caractérisée en ce que** le tronçon de fixation (15) est enfiché dans un puits d'enfichage (11) de la pièce de saisie et l'ouverture d'introduction (23) est un puits qui s'étend parallèlement au puits d'enfichage (11), en face duquel se trouve une ouverture d'enfichage étroite (27) dans laquelle s'engage une languette (28) de la plaque de caractérisation (24).

2. Clé selon la revendication 1, **caractérisée en ce que** la face large de la plaque de caractérisation (24) portant la caractérisation est visible à travers une fenêtre de caractérisation (31) qui est sensiblement en alignement avec la fenêtre de visualisation (25).

3. Clé selon l'une des revendications précédentes, **caractérisée par** des moyens d'encliquetage et de contre-encliquetage (29, 30) constitués par le côté étroit de la plaque de caractérisation et la paroi associée du puits formant l'ouverture d'introduction (23) pour la rétention de la plaque de caractérisation (24) dans l'ouverture d'introduction (23).

4. Clé selon l'une des revendications précédentes, **caractérisée en ce que** la direction d'enfichage de la plaque de caractérisation (24) est perpendiculaire à la direction d'enfichage de la lame de clé (16).
